# EUROPEAN PATENT APPLICATION

(11) **EP 1 940 173 A1**
(43) Date of publication of application: **02.07.2008**
(21) Application number: 07124082.4
(22) Date of filing: 27.12.2007
(51) Int. Cl.: H04N 7/24

(54) **Method and DVB-H system for providing broadcast image configuration information**

(30) Priority: 26.12.2006 KR 20060133765
(71) Applicant: Samsung Electronics Co., Ltd., Suwon-si, Gyeonggi-Do (KR)
(72) Inventor: Jang, Byung-Wook, Gyeonggi-do (KR); Park, Jung-Hun, Gyeonggi-do (KR)
(74) Representative: Grünecker, Kinkeldey, Stockmair & Schwanhäusser Anwaltssozietät

(57) **Abstract**

A method is provided in which a broadcast provider can flexibly change and provide an image configuration of a digital video broadcasting-handheld (DVB-H) reception terminal. Information required to configure a broadcast service image is provided to the DVB-H reception terminal using Java 2 Micro Edition (J2ME) midlet. A J2ME midlet file indicating image configuration information can be transmitted in at least one session in which electronic service guide (ESG) data is carried. The DVB-H reception terminal can display images based on broadcast service characteristics. Broadcast providers can configure and provide a differentiated broadcast service image, respectively.

## Description

The present invention generally relates to a digital video broadcasting-handheld (DVB-H) reception terminal, and more particularly to a method and system for providing image configuration information to a DVB-H reception terminal.

Digital video broadcasting-handheld (DVB-H) is a technical standard established to improve the reception rate of a terrestrial digital television (DTV) on the move in Europe. The DVB-H technology can implement mobile multimedia broadcasting that provides high-quality voice and video services anytime and anywhere, even when users are driving or walking.

The service model using this DVB-H technology has the following structure. First, a transmitting stage is constructed with an interactive network with a broadcast provider and a communication provider according to the DVB-universal mobile telecommunications service (UMTS) standard. The broadcast provider provides a terminal with compressed data in a DVB-H transmission scheme on the basis of a DVB-audio visual content (AVC) standard. The terminal communicates with a mobile communication provider through a communication standard such as DVB-UMTS/global system for mobile communications (GSM) and the like, and also provides the broadcast provider with information regarding the receiving side of the communication network in real time. The DVB-H reception terminal provides a user with a multimedia broadcast service by configuring and displaying an image for a DVB-H broadcast service.

A multimedia broadcast includes channels or contents of various media such as news, sports, shopping, dramas, movies, music, documentaries, and the like. Various images should be configured on the basis of channel or content characteristics. However, the conventional DVB-H reception terminal provides a DVB-H broadcast service using only a specific image configuration scheme predefined within the DVB-H reception terminal without considering channel or content characteristics.

Therefore, there are limitations in displaying various types of multimedia broadcast services without a special software upgrade process for displaying a multimedia broadcast implemented in the DVB-H reception terminal although multimedia broadcast formats are continuously being developed and changed.

The need is increasing for various image configurations based on characteristics of channels or contents for providing a multimedia broadcast in a digital video broadcasting-handheld (DVB-H) reception terminal as described above. With the current standard, only a batch image configuration scheme is possible. However, there is no method for variously changing an image configuration in the current standard. In addition, there is no method for providing image configuration schemes on a broadcast provider-by-broadcast provider basis. This is a very important structural problem that may be an obstacle in function extension of the DVB-H reception terminal.

The present invention has been designed to address at least the above problems and/or disadvantages and to provide at least the advantages described below. Accordingly, the object of exemplary embodiments of the present invention is to provide a method and system that can easily configure a broadcast service image of a DVB-H reception terminal.

An aspect of exemplary embodiments of the present invention is to provide a method and DVB-H system for providing broadcast image configuration information in which a broadcast provider can flexibly configure and provide a broadcast service image without directly configuring a broadcast image in a DVB-H reception terminal.

In accordance with an aspect of exemplary embodiments of the present invention, there is provided a method for providing broadcast image configuration information in a DVB-H reception system provided with a DVB-H transmission server and a DVB-H reception terminal, including determining, by the DVB-H reception terminal, whether information regarding a Java 2 Micro Edition (J2ME) midlet file indicating broadcast image configuration information is included in an electronic service guide (ESG) data session provided from a DVB-H transmission server; acquiring an associated J2ME midlet file using the J2ME midlet file information when the J2ME midlet file information is included; determining whether a J2ME midlet file linked to a broadcast service is present among already acquired J2ME midlet files when the broadcast service is required to be executed; and configuring and outputting a broadcast image using the J2ME midlet file when the linked J2ME midlet file is determined to be present.

In accordance with another aspect of exemplary embodiments of the present invention, there is provided a DVB-H system for providing broadcast image configuration information, including: a DVB-H transmission server for configuring and providing ESG data session in which a J2ME midlet file indicating broadcast image configuration information is included; and a DVB-H reception terminal for storing the J2ME midlet file by detecting a position of the J2ME midlet file from a received ESG data session, determining whether a J2ME midlet file linked to a broadcast service is present when the broadcast service is required to be executed, and configuring and outputting a broadcast image using the linked J2ME midlet file when the linked J2ME midlet file is determined to be present.

The above and other features and advantages of the present invention will be more apparent from the following detailed description taken in conjunction with the accompanying drawings, in which:
FIG. 1 is a block diagram illustrating a digital video broadcasting-handheld (DVB-H) reception terminal in accordance with the present invention;
FIG. 2 illustrates a session map of electronic service guide (ESG) data into which a Java 2 Micro Edition (J2ME) midlet file is inserted in accordance with the present invention;
FIG. 3 illustrates an example of a structure of a file delivery table (FDT) instance into which J2ME midlet file information is inserted in accordance with the present invention;
FIG. 4 illustrates an example in which a J2ME midlet file name is inserted into a content fragment in accordance with the present invention; and
FIG. 5 is a flow chart of a process for acquiring broadcast image configuration information in accordance with the present invention.

Exemplary embodiments of the present invention will be described in detail herein below with reference to the accompanying drawings. In the drawings, the same or similar elements are denoted by the same reference numerals even though they are depicted in different drawings. Descriptions of well-known functions and constructions are omitted for clarity and conciseness.

Exemplary embodiments of the present invention provide a method in which a broadcast provider can flexibly change and provide an image configuration of a digital video broadcasting-handheld (DVB-H) reception terminal. For this, information required to configure a broadcast service image is provided to the DVB-H reception terminal using Java 2 Micro Edition (J2ME) midlet. A J2ME midlet file indicating image configuration information can be transmitted in at least one session in which electronic service guide (ESG) data is carried. Then, the DVB-H reception terminal executes the J2ME midlet file at an execution time for an associated broadcast service after retrieving and storing the J2ME midlet file in a received session. As a result, the DVB-H reception terminal can display images based on broadcast service characteristics. Broadcast providers can configure and provide a differentiated broadcast service image, respectively.

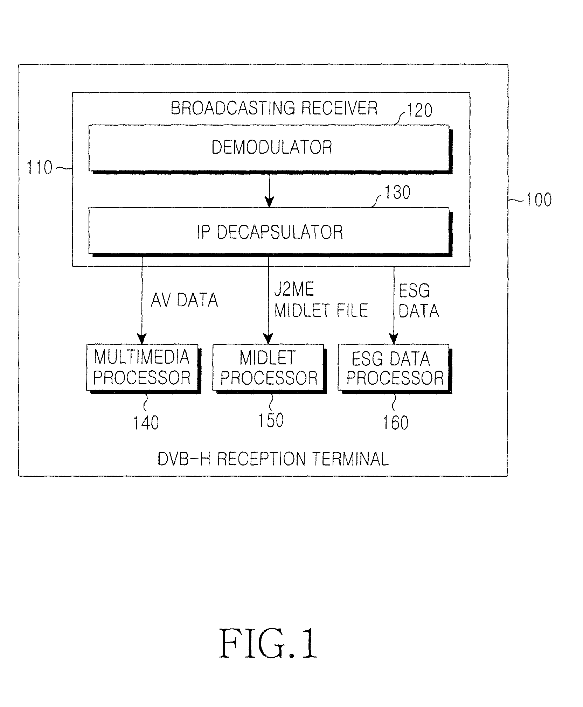

Next, components of the DVB-H reception terminal for processing broadcast data received from a broadcast provider and their operations in accordance with an exemplary embodiment of the present invention will be described with reference to FIG. 1.

First, data received from the broadcast provider for broadcasting data is divided into audio/video (AV) data, ESG data, and a J2ME midlet file. The AV data is multimedia data for reproducing a broadcast service provided from the broadcast provider into audio and video signals in the DVB-H reception terminal. The ESG data is used to retrieve a user's desired broadcast service as guide information for various broadcast services. The J2ME midlet file is provided from the broadcast provider and contains broadcast image configuration information required to display the associated broadcast service. This J2ME midlet file can be transmitted in one session in which the ESG data is carried in accordance with an exemplary embodiment of the present invention. Alternatively, the broadcast provider can include and transmit the J2ME midlet file that is divided in multiple sessions.

When the broadcast data is provided from the broadcast provider, DVB-H reception terminal 100 recovers the AV data, the ESG data and the J2ME midlet file from received broadcast data by demodulating and decapsulating the received broadcast data using a demodulator 120 and an Internet protocol (IP) decapsulator 130 within a broadcasting receiver 110. The AV data is output to a multimedia processor 140 and is used to output a broadcast based on a channel selected by the user. The ESG data is output to an ESG data processor 160 and is used to output program guide information for broadcast services when the user desires to output the ESG data. The J2ME midlet file is output to a midlet processor 150 and is used to configure a broadcast image at a time at which a linked broadcast service is executed.

The broadcast data received from the broadcast provider is decoded into original signals through the demodulation and decapsulation processes. In accordance with an exemplary embodiment of the present invention, the DVB-H reception terminal extracts only a J2ME midlet file from a session in which ESG data is carried and then stores the extracted file.

Many different methods can be provided to extract a J2ME midlet file from an ESG data session. For example, the DVB-H reception terminal can extract the J2ME midlet file from one specific session or can extract the J2ME midlet file from multiple sessions.

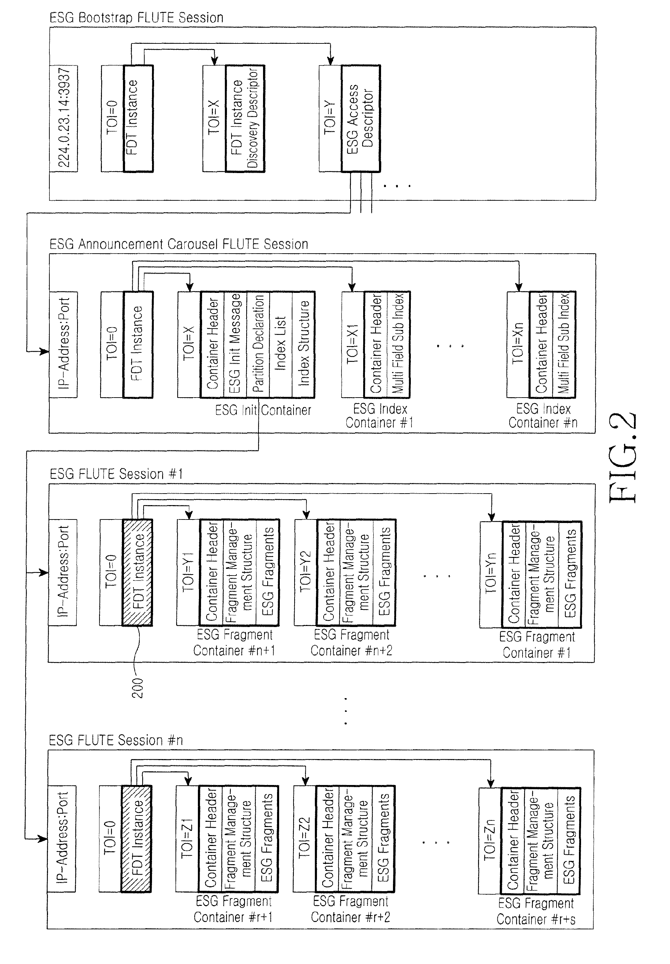

The reception of a J2ME midlet file in a transmission structure of ESG data in a DVB-H system as illustrated in FIG. 2 and an operation of the system will be described.

Upon receiving an ESG stream, the terminal acquires mandatory information required to receive a service from a service provider. When the user selects a specific service, the terminal receives data after accessing a data stream in which the service is provided using the acquired information. Information for accessing a service data stream from the terminal is transmitted in an ESG fragment.

Several ESG data models are tied on a fragment-by-fragment basis and are contained in one container. The container, which is regarded as one object is transmitted in a file delivery over unidirectional transport (FLUTE) session.

In an ESG multiple-stream transport mode, ESG containers are transmitted in at least three sessions as illustrated in FIG. 2. An ESG bootstrap session indicates an ESG Announcement Carousel FLUTE session that gives notification of session information and the number of sessions in which actual ESG containers are transmitted.

Referring to FIG. 2, channel information of the ESG bootstrap session for transmitting ESG data is reported to the terminal. When accessing a channel based on the channel information, the terminal receives bootstrap information. The bootstrap information is configured with an ESG provider descriptor and an ESG access descriptor. The ESG provider descriptor contains information regarding an identifier (ID), name and logo of an ESG provider and the like. The ESG access descriptor contains information regarding ESG Announcement Carousel, IP addresses and the number of IP sessions in which ESG data is transmitted.

The ESG Announcement Carousel contains an ESG Init Container and ESG Index Containers. Information to be transported in the Init Container is as follows. The ESG Init Container contains option information of a decoder for decoding an ESG, Partition Declaration, Index List, and Index Structure. When the ESG is transported in a number of sessions, session-by-session partition criterion information and session-by-session channel information can be transmitted in the Partition Declaration within the Init Container. Mapping information between ESG fragments to be transmitted and containers can be transmitted in the Index List and Index Structure. In FIG. 2, the ESG FLUTE session is an ESG data session and FLUTE is used as a protocol for delivering a J2ME midlet file.

In the FLUTE corresponding to the file delivery protocol, meta-information for a file to be transmitted in a file delivery session is transmitted. On the basis of this information, the terminal can receive and decode all or some files. The terminal can extract and store only a J2ME midlet file. The meta-information includes information regarding a file to be transmitted, such as Content-Encoding, Content-Length, Content-Location, Content-Type, Transport Object identifier (TOI), Transfer-Length, and the like. Meta-information of all files of an ESG FLUTE session is included in a file delivery table (FDT) instance for each session. In this case, since image configuration information for providing a broadcast service varies with channel or content characteristics, at least one J2ME midlet file indicating the image configuration information can be transmitted.

In accordance with an exemplary embodiment of the present invention, information related to the J2ME midlet file is inserted into an FDT instance of a specific session as indicated by reference numeral 200 of FIG. 2 and is transmitted. To include and transmit the J2ME midlet file in the session, a J2ME midlet type corresponding to a content type should be additionally defined in the FDT instance. When one session is designated and the J2ME midlet file is transmitted, information regarding an IP stream ID, source IP address, destination IP address, port number, and the like for session partitioning is added to a bootstrap FLUTE session.

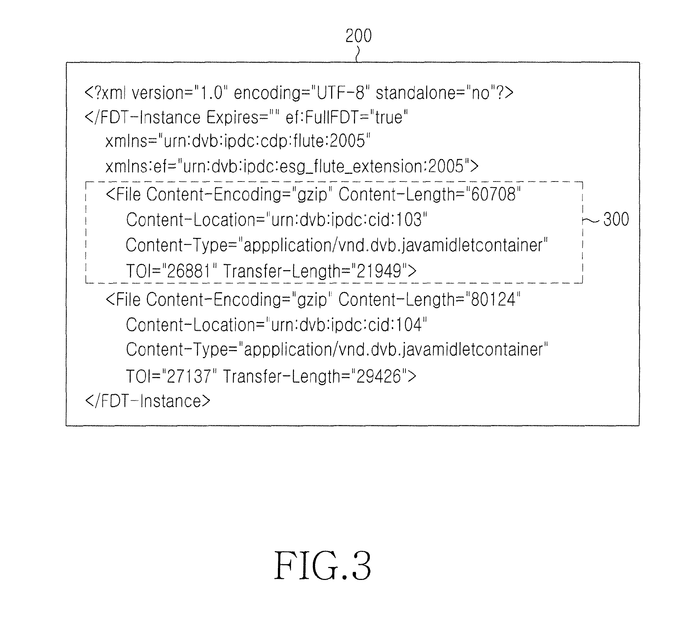

An example of inserting the J2ME midlet file information into the FDT instance is illustrated in FIG. 3. The terminal uses and reads FDT instance 200 when determining files to be downloaded in a session. For example, as indicated by reference numeral 300, the terminal reads Content-Type and determines whether a J2ME midlet file is included in an associated session. On the basis of the "Content-Type" additionally defined to identify the J2ME midlet file, the terminal can detect the J2ME midlet file to be downloaded. In FIG. 3, each file is identified by a TOI.

Alternatively, both the ESG data and the J2ME midlet file can be transmitted in the same session. In this case, file information for transmitting the J2ME midlet file can be added to an existing FDT instance including information for transmitting the ESG data.

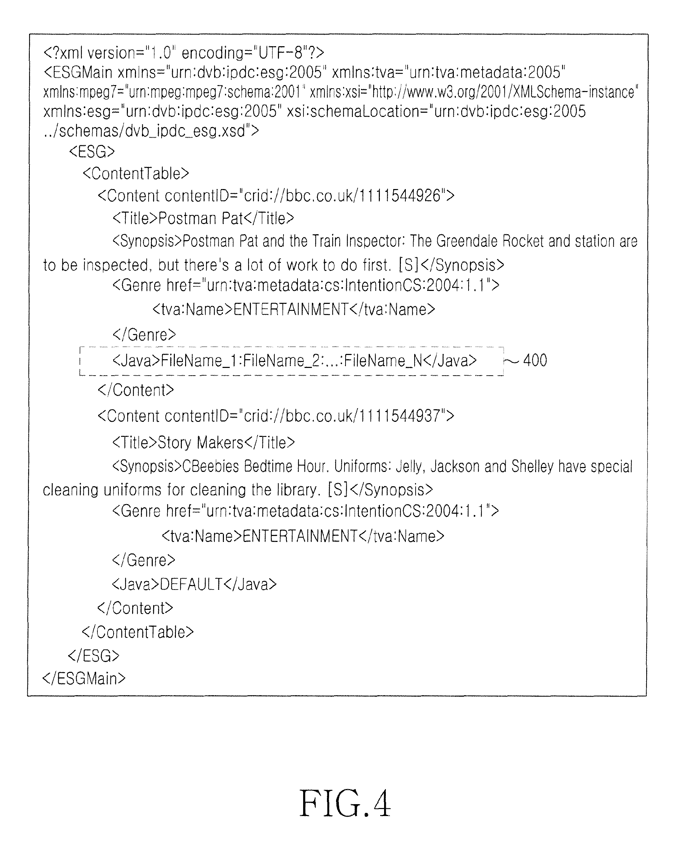

In this method, an ID for identifying the J2ME midlet is added to and transmitted in a service fragment or content fragment when the ESG data is transmitted such that each J2ME midlet file stored in the terminal is mapped to a broadcast service on a one-to-one basis. The J2ME midlet ID inserted into each fragment indicates a type of midlet to be used for each service or content configuring an image of the associated content or service when the broadcast service is executed. An example of inserting the ID into the service fragment or content fragment is illustrated in FIG. 4.

Referring to Fig. 4, as indicated by reference numeral 400, a Java field is added and a required file name is added when a Java application runs.

Java field 400 indicates which J2ME midlet file is to be used for specific content and indicates that broadcast image information designated by a broadcast provider, that is, J2ME midlet files, are mapped on a content ID-by-content ID basis such that content characteristics can be expressed. At this time, a J2ME midlet file name is inserted into a content fragment. The terminal retrieves a file corresponding to a file name from among already received J2ME midlet files by reading the file name. When multiple files are required, the files are divided with a colon (:) as in Java field 400. When a broadcast provider desires to provide a broadcast service in a basic broadcast image, a default is set within the Java field, such that the basic broadcast image can be displayed on the terminal. When there is no file corresponding to a file name, the terminal provides the basic broadcast image. At this time, a midlet file for the basic broadcast image can be pre-stored. Alternatively, the midlet file can be received along with a different Java application file.

When the associated J2ME midlet file is present, the terminal configures and displays a broadcast image suitable for content. When the J2ME midlet file name mapped to content is not indicated, the terminal configures the broadcast image using a J2ME midlet file designated by the default.

The ESG data is contained and transmitted in a container as described with reference to FIG. 2. Each container is constructed with fragment management structure information indicating information of fragments configuring the container, ESG fragments of service, content fragments, and the like. The ESG data has broadcast service information and is transmitted to the terminal using a special IP stream at a time different from that of an actual data stream. Thus, the broadcast provider, that is, the service provider, can provide the user with information to be known in advance before a service is transmitted or before the user receives the service using an ESG model.

Upon receiving the ESG data, the terminal acquires mandatory information required to provide broadcast image configuration information and a broadcast service from the broadcast provider. When the user selects a specific broadcast service, the terminal not only can receive data after accessing a data stream in which the broadcast service is transmitted, but also can output a desired broadcast image from the broadcast provider using the acquired broadcast image configuration information.

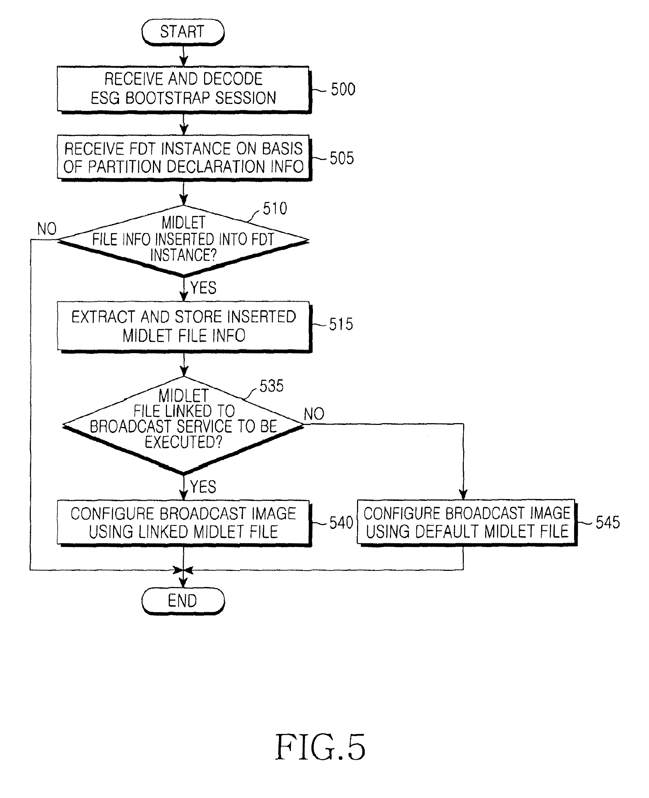

A process for acquiring a J2ME midlet file corresponding to broadcast image configuration information in the terminal will be described with reference to FIG. 5.

To insert a J2ME midlet file to be transmitted to the terminal into an ESG FLUTE session, the broadcast provider designates a position of the ESG FLUTE session in an ESG bootstrap session. The broadcast provider inserts J2ME midlet file information, such as an insertion position of the J2ME midlet file, compression information, and the like into an FDT instance in the session. The broadcast provider inserts a J2ME midlet file name into an associated fragment using a service fragment or content fragment of the ESG FLUTE session such that the J2ME midlet file can be executed at a time which an associated content or service image configuration is required. That is, the broadcast provider transmits in a state in which content or service information is linked to the J2ME midlet file name such that the terminal can determine whether to execute a J2ME midlet file when a content or service image is configured. At this time, the J2ME midlet file is created along with ESG data in the ESG FLUTE session when the ESG data is transmitted.

On the other hand, when the broadcast provider completely generates and transmits an ESG bootstrap session, the terminal receives and decodes the ESG bootstrap session in step 500. Specifically, the terminal decodes the ESG access descriptor of the ESG bootstrap session. The ESG access descriptor has information of an announcement carousel session. When the terminal receives an initial container by detecting the announcement carousel session, partition declaration information is included in the initial container.

The terminal receives an FDT instance on the basis of the partition declaration information in step 505. The terminal determines whether midlet file information is inserted into the FDT instance in step 510. This determination is made on the basis of a content type. If the midlet file information is inserted into the FDT instance, it means that an actual J2ME midlet file is included and transmitted in an associated session. The terminal checks the content type to determine whether there is a session with the J2ME midlet file. When the content type indicates the midlet file, the terminal proceeds to step 515 to extract and store the midlet file information inserted into the FDT instance. That is, the terminal receives the FDT instance, receives the J2ME midlet file on the basis of information acquired from the received J2ME midlet file, identifies the file using a TOI, and stores the received J2ME midlet file.

When the associated midlet file is acquired through the above-described process, the terminal can configure a broadcast image using the midlet file. Thus, broadcast providers can provide broadcast images with unique configurations considering not only channel or content characteristics but also characteristics of the broadcast providers.

To output a broadcast image, the terminal determines whether there is a midlet file linked to a broadcast service when the user executes a specific broadcast service in step 535. Since ESG data indicating a midlet file to be executed is received in every broadcast service, the terminal can detect a midlet file linked to a broadcast service on the basis of the ESG data. When the linked midlet file is present, the terminal configures a broadcast image using the linked midlet file in step 540. However, when the linked midlet file is absent, that is, a name of a midlet file to be executed is not indicated in the ESG data, the terminal configures a broadcast image using a default midlet file in step 545.

When the user selects a specific broadcast service, for example, a specific channel or content, the terminal can configure an image suitable for a characteristic of the broadcast service using a J2ME midlet file with a file name indicated in ESG data after analyzing the ESG data and the broadcast service currently being broadcasted.

As is apparent from the above description, the present invention can provide various images suitable for content types and content characteristics by configuring images according to intentions of service providers irrespective of terminal manufacturers or terminal types when channels or contents are reproduced.

While the invention has been shown and described with reference to certain exemplary embodiments of the present invention thereof, it will be understood by those skilled in the art that various changes in form and details may be made therein without departing from the scope of the present invention as further defined by the appended claims.

## Claims

1. A method for providing broadcast image configuration information in a digital video broadcasting-handheld, DVB-H, system provided with a DVB-H transmission server and a DVB-H reception terminal, comprising the steps of:
(a) determining, by the DVB-H reception terminal, if information regarding a Java 2 Micro Edition, J2ME, midlet file indicating broadcast image configuration information is included in an electronic service guide, ESG, data session provided from a DVB-H transmission server;
(b) acquiring an associated J2ME midlet file using the J2ME midlet file information when the J2ME midlet file information is included;
(c) determining if a J2ME midlet file linked to a broadcast service is present among already acquired J2ME midlet files when the broadcast service is required to be executed; and
(d) configuring and outputting a broadcast image using the J2ME midlet file when the linked J2ME midlet file is determined to be present.

2. The method of claim 1, wherein step (a) further comprises:
(a-1) detecting a position of an ESG announcement carousel session from an ESG bootstrap session;
(a-2) reading partition declaration information from an initial container of the ESG announcement carousel session in the detected position;
(a-3) receiving a file delivery table, FDT, instance using the partition declaration information; and
(a-4) determining if the J2ME midlet file information is inserted into the FDT instance.

3. The method of claim 2, wherein step (a-4) further comprises:
determining if a content type within the FDT instance indicates a predefined J2ME midlet file.

4. The method of claim 1, wherein step (c) further comprises:
determining if a J2ME midlet file name mapped to one of a service fragment and a content fragment is present in the ESG data session; and
detecting an associated J2ME midlet file with the J2ME midlet file name from among the already acquired J2ME midlet files.

5. A digital video broadcasting-handheld, DVB-H, system for providing broadcast image configuration information, comprising:
a DVB-H transmission server for configuring and providing an electronic service guide, ESG, data session in which a Java 2 Micro Edition, J2ME, midlet file indicating broadcast image configuration information is included; and
a DVB-H reception terminal for storing the J2ME midlet file by detecting a position of the J2ME midlet file from a received ESG data session, determining if a J2ME midlet file linked to a broadcast service is present when the broadcast service is required to be executed, and configuring and outputting a broadcast image using the linked J2ME midlet file when the linked J2ME midlet file is determined to be present.

6. The DVB-H system of claim 5, wherein the DVB-H reception terminal detects a position of an ESG announcement carousel session from an ESG bootstrap session, reads partition declaration information from an initial container of the ESG announcement carousel session in the detected position, receives a file delivery table, FDT, instance using the partition declaration information, determines if the J2ME midlet file information is inserted into the FDT instance, and acquires and stores an associated J2ME midlet file using the inserted J2ME midlet file information upon determining that the J2ME midlet file information is inserted.

7. The DVB-H system of claim 6, wherein the DVB-H reception terminal determines if the J2ME midlet file information is inserted by determining whether a content type within the FDT instance indicates a predefined J2ME midlet file.
